(19)

Europäisches Patentamt
European Patent Office
Office européen des brevets

(11) **EP 3 680 628 A1**

(12) **EUROPEAN PATENT APPLICATION**

(43) Date of publication:
**15.07.2020 Bulletin 2020/29**

(51) Int Cl.:
**G01F 1/60** *(2006.01)*         **G01F 25/00** *(2006.01)*
**G01F 1/58** *(2006.01)*

(21) Application number: **20150488.3**

(22) Date of filing: **07.01.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.01.2019 US 201916244060**

(71) Applicant: **Georg Fischer Signet LLC
El Monte, CA 91734 (US)**

(72) Inventors:
• **Ciobanu, Calin
  Brea, CA 92821 (US)**
• **Lomibao, Jeffrey
  La Puente, CA 91746 (US)**

(74) Representative: **Fenner, Seraina
Georg Fischer AG
Amsler-Laffon-Strasse 9
8201 Schaffhausen (CH)**

(54) **MAGNETIC FLOWMETER ASSEMBLY WITH ZERO-FLOW MEASUREMENT CAPABILITY**

(57)     A system and related method for operating a magnetic flowmeter. The method includes driving a first coil assembly with a first coil driver and a second coil assembly with a second coil driver to a zero (0) electrical potential. Then measuring a residual voltage in the conductive fluid using a pair of electrical electrodes, the residual voltage corresponding to a zero-flow measurement error. Correcting an induced voltage measurement detected by the pair of electrical electrodes when the first and second coil assemblies are driven to non-zero electrical potentials. The corrected voltage measurement is determined by subtracting the zero-flow measurement error from the induced voltage measurement. Lastly, determining a corrected fluid velocity based on the corrected voltage measurement, the corrected fluid velocity measurement accounting for the zero-flow measurement error.

FIG. 1

EP 3 680 628 A1

## Description

### FIELD OF THE INVENTION

The present invention relates generally to the control and operation of sensors for measuring fluids and more particularly to magnetic flowmeters for performing fluid flow measurements.

### BACKGROUND OF THE INVENTION

Magnetic flow meters measure the velocity of conductive fluids passing through pipes by generating a magnetic field and measuring the resultant voltage. These flowmeters rely upon Faraday's Law in which the flow of a conductive fluid through a magnetic field causes a voltage signal which is sensed by electrodes and the sensed voltage is proportional to the fluid's velocity.

Magnetic flowmeter assemblies are generally either insertion mag-meters or full bore mag-meters. Insertion mag-meters typically include a sensor body which is placed into a fluid flow and electrodes which are disposed at the distal end of the sensor body. The sensor can include conductive coils that generate a magnetic field which, in combination with the fluid flow creates an electromotive force (voltage), which is then sensed by the electrodes. Full bore mag-meters typically include a tubular body disposed inline along a fluid conduit, with electrodes molded into the walls of the body and conductive coils disposed on the tubular body that generates a magnetic field across the body.

Although these flowmeters are generally effective, shortfalls exist. For example, an important feature of current magnetic flowmeters is the meter's "cutoff flow" value. The "cutoff flow" value represents the lowest fluid velocity that a magnetic flowmeter can measure. The closer the cutoff flow value is to zero, the greater the utility and value of the magnetic flowmeter. However, current magnetic flowmeters suffer from various measurement errors that prevent the accurate measurement of fluid velocities that approach zero. Moreover, by measuring and tracking these measurement errors, important information regarding the fluid and measurement process can be obtained.

It should, therefore, be appreciated that there remains a need for a magnetic flowmeter assembly that addresses these concerns. The present invention fulfills these needs and others.

### SUMMARY OF THE INVENTION

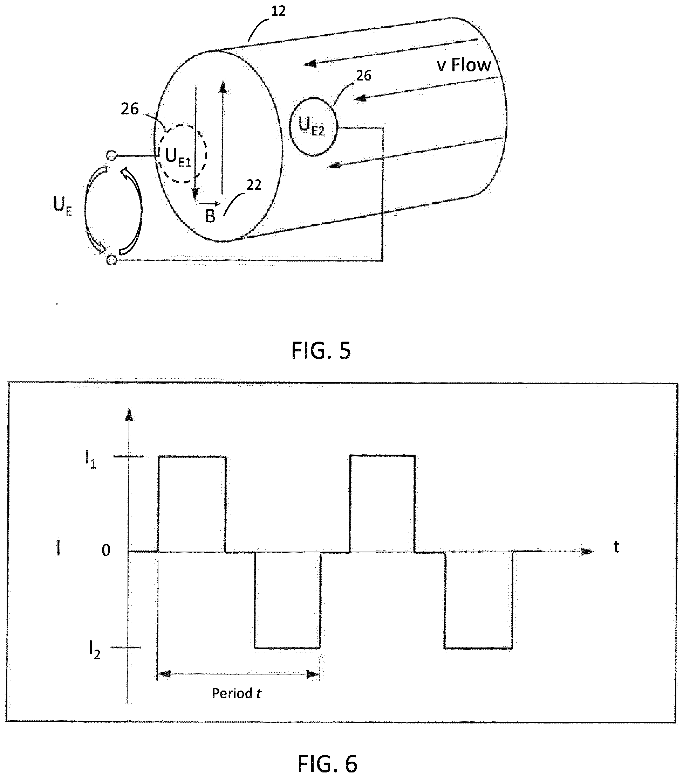

Briefly and in general terms, the present invention provides a system and related method for operating a magnetic flowmeter. The flowmeter measures the velocity of a conductive fluid in a flow path by driving first and second coil assemblies with an alternating current which generates an alternating magnetic field. During the change of the drive currents polarity, the current is set to zero for a specified duration which makes the magnetic field B equal zero (see fig 6 to 8). When the magnetic field B equals zero (0) the measured liquid velocity also equals zero (0). A corrected voltage measurement is then calculated by subtracting the zero-flow error from an induced voltage detected by the pair of electrical electrodes when the first coil assembly and the second coil assembly are driven to a non-zero electrical potential. A corrected fluid velocity is then determined from the corrected voltage measurement, the corrected fluid velocity being corrected for the zero-flow measurement error. This is especially important at lower flow velocities and helps determine the low flow cutoff value.

The system comprises a first coil driver for providing a first current through a first coil assembly, a second coil driver for providing a second current through a second coil assembly and a corresponding sensor for measuring an electrical property associated with the first and the second coil assemblies respectively. The system is further configured to provide feedback to a first and second voltage regulator in response to the measured electrical property. As such, the first and the second voltage regulators can modify the current through the first and the second coil assemblies in response to the feedback signal, and thereby enable a prescribed magnetic field to be created within the fluid flow path.

More specifically, by example and not limitation, the system includes a tubular body with opposing ends configured to enable fluid flow therebetween. A pair of measuring electrodes is attached to the tubular body to measure the voltage induced by a conductive fluid flowing through the magnetic field created by the coil assemblies. By using the measured voltage, the fluid velocity and flow rate can be calculated by using a processor electrically coupled to the measuring electrodes.

In a detailed aspect of an exemplary embodiment, the system comprises an instrumentation amplifier for scaling the electrical property measured by the corresponding sensor, an analog-to-digital converter for converting the electrical property, and an error amplifier for detecting a difference between the measured electrical property and a targeted (desired) electrical property. Based on the detected error, a proportional-integral-derivative (PID) controller provides a pulse-width-modulator (PWM) with an output for minimizing the error detected by using a system tuning process. The PWM output is filtered, buffered and summed into a control feedback for the voltage regulators, which then controls the voltage output, and thus current, passing through a coil driver and the respective coil assembly.

In another detailed aspect of an exemplary embodiment, the coil drivers are configured to alternate the direction of the current passing through each coil assembly, wherein one cycle in a given time period represents the current flowing in a first direction through each coil assembly, followed by flowing in a second direction through each coil assembly.

In yet another detailed aspect of an exemplary embodiment, the corresponding sensor is embodied as a shunt resistor.

For purposes of summarizing the invention and the advantages achieved over the prior art, certain advantages of the invention have been described herein. It is to be understood that not necessarily all such advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other advantages as may be taught or suggested herein.

All of these embodiments are intended to be within the scope of the invention disclosed herein. These and other embodiments of the present invention will become readily apparent to those skilled in the art from the following detailed description of the preferred embodiments having reference to the attached figures, the invention not being limited to any particular preferred embodiment disclosed.

**BRIEF DESCRIPTION OF THE DRAWINGS**

Embodiments of the present invention will now be described, by way of example only, with reference to the following drawings:

FIG. 1 is a simplified perspective view of a magnetic flowmeter assembly in accordance with the present invention.

FIG. 2 illustrates a time varying magnetic field B created within a fluid flow path of a magnetic flowmeter.

FIG. 3 is a simplified diagram of a circuit for independently driving and controlling the magnetic field of a magnetic flowmeter

FIG. 4 is a simplified diagram of a circuit for an H bridge coil driver configured to alternate the current direction flowing through a coil assembly.

FIG. 5 is a simplified perspective view depicting the operation of the independent coil driver in accordance with the present invention.

FIG. 6 illustrates a time varying electrical current (I) depicting alternating current directions flowing through a coil assembly.

FIG 7 illustrates a time varying magnetic field B within the fluid flow path based on alternating current direction flowing through a coil assembly.

FIG. 8 illustrates a time varying voltage measured between measuring electrodes based on alternating current direction flowing through a coil assembly.

FIG. 9 depicts a method for controlling a full bore magnetic flow meter in accordance with the invention.

FIG. 10 is a simplified perspective view of a magnetic flowmeter assembly in accordance with the present invention, including a brace coupled to a pair of coils forming magnetic circuity circumscribing the pipe.

FIG. 11 is a simplified perspective view of a magnetic flowmeter assembly of FIG. 10, further comprising a shield housing and electronic assembly.

FIG. 12 depicts a method for operating a magnetic flowmeter in accordance with the invention.

FIG. 13 is an illustrative control chart for analyzing zero-flow data and determining whether the magnetic flowmeter is operating properly over time.

**INCORPORATION BY REFERENCE**

In certain embodiments of the present invention, the magnetic flowmeter assembly can be configured as described and claimed in Applicant's co-pending patent applications, entitled "FULL BORE MAGNETIC FLOWMETER ASSEMBLY," U.S. App. No. 16/146,090, filed September 28, 2018, and entitled "MAGNETIC FLOWMETER ASSEMBLY HAVING INDEPENDENT COIL DRIVE AND CONTROL SYSTEM," U.S. App. No. 16/243,868, filed January 9, 2019, which are hereby incorporated by reference for all purposes.

**DETAILED DESCRIPTION OF THE PREFERRED EMBODIMENTS**

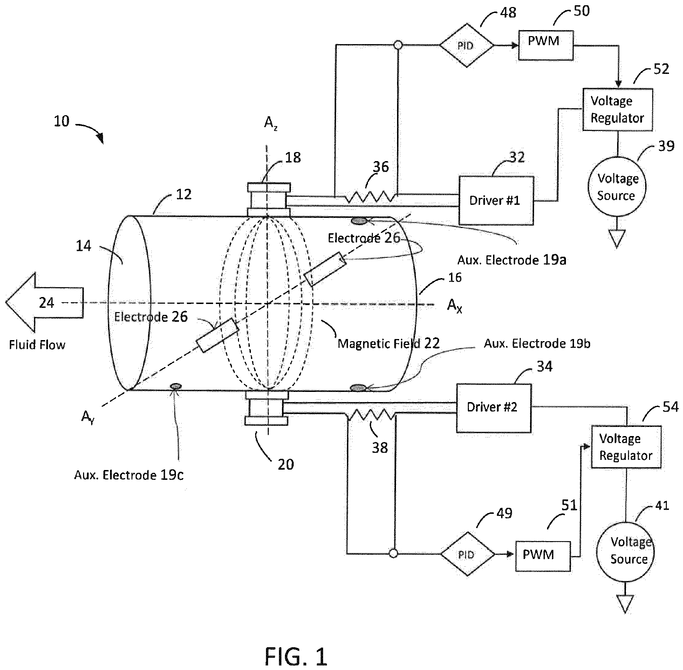

Referring now to the drawings, and in particular FIG. 1, there is shown a magnetic flow meter assembly 10 having a novel coil drive and control system. The magnetic flow meter assembly 10 has a tubular body (e.g., pipe) 12 that has two opposing ends 14 and 16 which are aligned along a horizontal axis (Ax) and which define a fluid flow path therebetween. The magnetic flow meter assembly 10 includes a pair of coil assemblies (18, 20) which are coupled to an intermediate region of the flowmeter, and are configured to pass current as received from voltage regulators (52, 54) via a first and second coil driver (32, 34). The coil assemblies (18, 20) can therefore generate a magnetic field 22 within the fluid flow path 24 of the tubular body 12, via the current passing therein. A pair of measuring electrodes 26 attached to the body 12 are configured to detect a voltage induced by the conductive fluid passing through the magnetic field 22. Moreover, the coil assemblies are each electrically coupled with at least one sensor (36, 38) that provides feedback to a respective voltage regulator (52, 54) via a proportional-integral-derivative (PID) controller (48, 49) configured to keep the ERROR between a respective measured current and a target current as zero. As such, based on the received feedback, the respective voltage regulators (52, 54) can manipulate the current passing through the corresponding coil assembly (18, 20) to overcome factors causing the drive current to deviate from a targeted current, thereby enabling a prescribed magnetic field to be created within the fluid flow for accurate flow measurement.

With continued reference to FIG.1, the coil assemblies (18,20) can be externally coupled to the tubular body 12, aligned along a vertical axis (Az) which is orthogonal to the longitudinal axis (Ax). The pair of measuring electrodes 26 can be aligned along axis (Ay) which is orthogonal to the longitudinal axis (Ax) and vertical axis (Az), and configured to detect the voltage induced by being in electrical communication with the fluid within the fluid flow path. The magnetic flowmeter assembly 10 further includes a plurality of auxiliary electrodes 19 (a, b, c), including a first auxiliary electrode 19(a) and a second auxiliary electrode 19(b) that are disposed upstream of the pair of measuring electrodes 26. The first and the second auxiliary electrodes are aligned with the axis (Az), on opposing sides of the pipe, such that axis (Ay) and axis (Az) are coplanar. A third auxiliary electrode 19(c) is disposed downstream of the pair of measuring electrodes 26. The measuring electrodes and the auxiliary electrodes are each mounted to a corresponding aperture formed in the wall of the pipe 12.

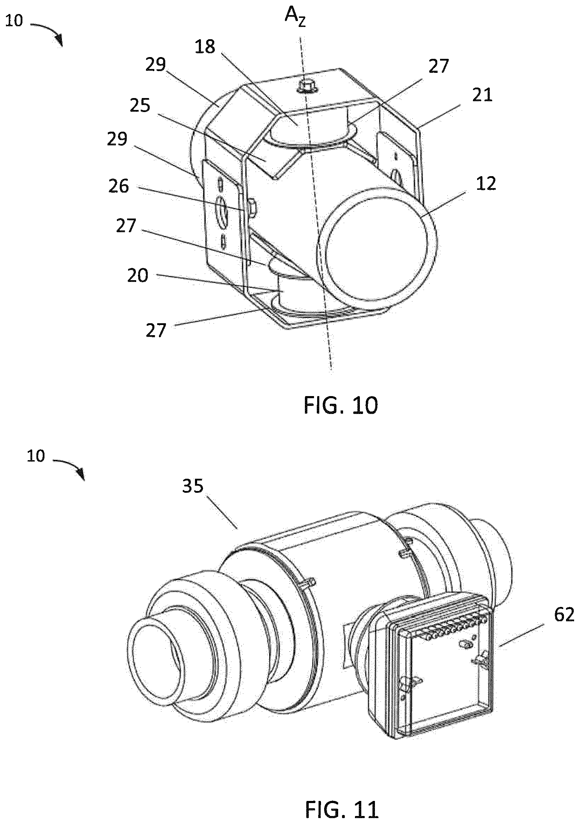

A housing is coupled externally to the tubular body 12 and is configured to hold at least one processor that is electrically coupled to the electrodes (as seen in FIG. 11). In an exemplary embodiment, the signal from each of the two measuring electrodes 26 follows a signal conditioning path consisting of high sensitivity Op Amps and an adjustable Gain Instrumentation Amplifier. The voltage signal (i.e., difference between the two measuring electrodes) is further processed by a high-resolution Analog-to Digital Converter (ADC) and processor. The digitally converted voltage signal is scaled and processed by a second processor to accurately display and/or provide an output that is proportional to the fluid velocity (i.e. digital outputs, 4-20 mA analog output).

The magnetic flow meter assembly 10 relies upon Faraday's Law of Electromagnetic Induction to measure the velocity of the conductive fluid in the tubular body. Specifically, Faraday's Law states that the voltage induced across any conductor that moves at right angles through a magnetic field is proportional to the velocity of the conductor.

$$Ue \text{ is proportional to } v \times B \times L$$

Where:

Ue = inducted voltage (i.e., signal voltage)

v = average velocity of conductive fluid
B = magnetic field strength
L = length of the conductor (i.e., distance between electrodes)

Alternatively, the average fluid velocity v is proportional

$$to \frac{Ue}{B \times L}$$

The flow of the conductive liquid through the magnetic field B creates a voltage signal Ue which can be sensed by the pair of measuring electrodes (26) and which in-turn can be used to calculate the velocity v of the conductive fluid. Magnetic flow meters are generally very accurate (e.g., < 1% measurement error). As Faraday's equation illustrates, variations in the magnetic field strength B can cause significant errors in the fluid velocity v measurement.

As aforementioned, the magnetic field can be created by a pair of coil assemblies coupled to a magnetic flow assembly. Moreover, it is known that for a Helmholtz coil pair, the magnetic field B is proportional to the current I and the number of loops (e.g., number of turns), and the direction of the magnetic field is determined by the current polarity based on the right-hand rule. It is also known that the greater the magnetic field, the greater the induced voltage as measured by the electrodes.

Accordingly, variations in the magnetic field B strength can introduce significant errors into the fluid flow measurement. These variations can be caused by a number of factors including temperature changes of the coils, differences in the coil's electrical properties, drift of the drive electronics, and dimensional changes of the fluid flow path, among others. For example, the coil resistance $R_{coil}$ is a function of the coil's temperature.

$$R_{coil} = R_{coil@25^o{}_c} + R_T(T\text{-}25^o c)$$

From the equation we see that the coil resistance $R_{coil}$ changes linearly with temperature change, increasing when the temperature increases and decreasing when the temperature decreases.

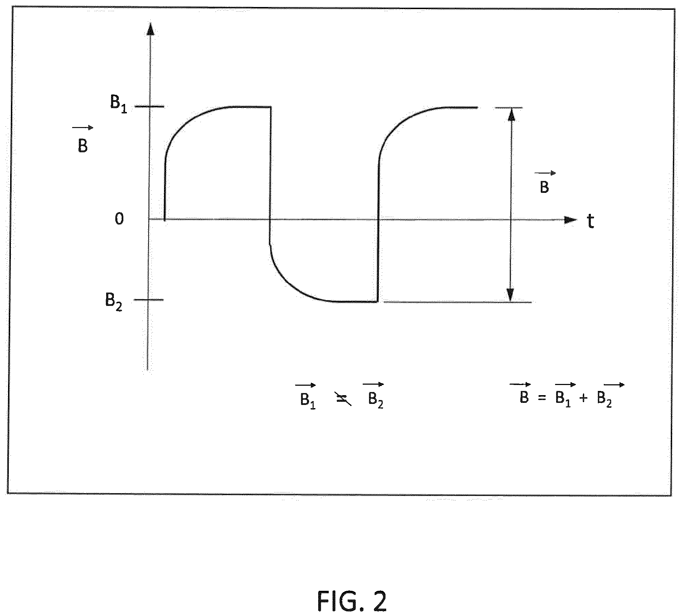

With reference to FIG. 2, an exemplary depiction of a magnetic field B within the fluid flow field is shown. The magnitude of the magnetic field is shown as not perfectly symmetrical (e.g., amplitude of $\vec{B_1}$ does not equal $\vec{B_2}$) for the same drive current I. Ideally the absolute value of $\vec{B_1}$ would equal the absolute value of $\vec{B_2}$, thereby enabling the time varying magnetic field B to be uniform over time. The individual values of $B_1$ and $B_2$ are generated by alternating the current's direction through each coil assembly (18,20). Specifically, $B_1$ is the magnetic field generated from the current flowing through both coil assemblies in a first direction, while $B_2$ is the magnetic field generated from the current flowing through both coil assemblies in the opposite direction (as further described below). Moreover, the current flow through each coil assembly (18, 20) follows the right-hand rule, and as such, each coil assembly generates a respective magnetic field, which combined together obtains a respective magnetic field present across the fluid ($B_1$, $B_2$). For example, the magnetic field generated by the first coil assembly $B_1$ (e.g. 18 in FIG. 1) may be going upward toward the fluid, while the magnetic field generated by the second coil assembly $B_2$ (e.g. 20 in FIG. 1) may also be going upward away from the body 12, thereby augmenting the magnetic field of the first coil assembly. An overall, absolute magnetic field B over a given time period can be based on a summation of $B_1$ and $B_2$. Moreover, as noted earlier, each magnetic field generated by each coil assembly is proportional to the respective drive current, and thus, by regulating the individual coil drive currents, a uniform magnetic field can be achieved.

Referring again to FIG. 1, the coil drive system includes first and second coil drivers (32, 34) which drive the current through the first and second coil assemblies (18, 20), first and second sensors (36, 38) for measuring an electrical property associated with the coil assemblies, first and second voltage sources (39, 41) coupled to first and second voltage regulators (52, 54), respectively, for outputting a desired voltage to each coil driver (32, 34) based on feedback received from a first and second PID controller (48, 49). Each PID controller (48, 49) is responsive to the respective sensed electrical property.

The two coil assemblies (18, 20) are driven by the two independently controlled and operated coil drivers (32, 34) which provide a time-varying drive current ($I_1$, $I_2$). The coil drivers (32, 34) are each electrically coupled to a respective voltage source (39, 41) with a voltage output that is regulated by a respective voltage regulator (52, 54) in real-time based upon feedback from the sensors (36, 38) which measure an electrical property of the coil assemblies. This ensures that a constant drive current ($I_1$, $I_2$) is provided by the coil drivers (32, 34) to the coil assemblies (18, 20) regardless of environmental and physical changes to the coil assemblies. The drive current through the coils can have a frequency range of near zero (0 Hz) to the kilohertz range, and a magnitude generally less than ten (10) amps.

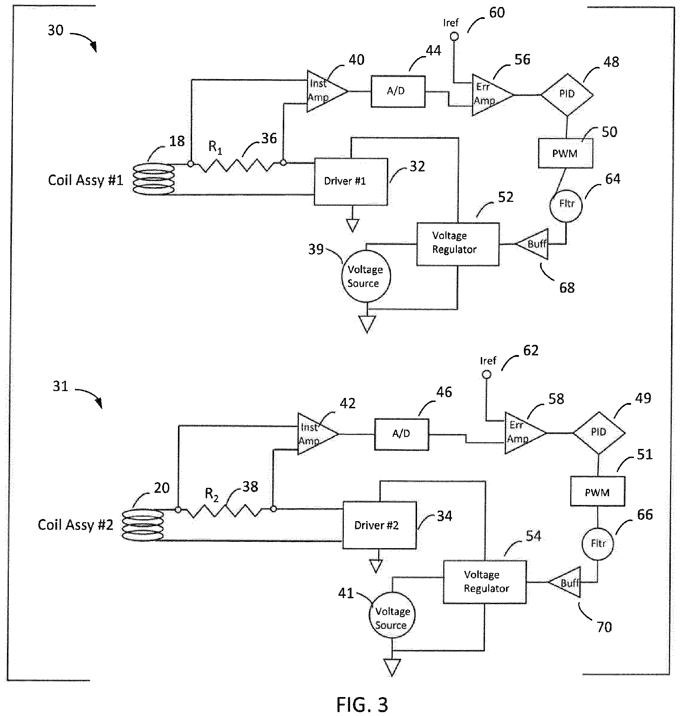

With reference to FIG. 3, the coil drive systems (30, 31) for each coil assembly (18, 20) are shown in greater detail. It should be noted that most Helmholtz coils employ direct current (DC) to produce a static magnetic field. However, for this flowmeter application, a time varying magnetic field is used to avoid material migration of the electrodes (26, 19a, 19b, 19c) (described below).

As aforementioned, the drive systems (30, 31) each include a pair of coil drivers (32, 34) for driving the first and second coil assemblies (18, 20), sensors which are embodied as shunt resistors (36, 38) for measuring the current driving the coil assemblies, a pair of instrumentation amps (40, 42) for scaling the measured drive current ($I_1$, $I_2$), a pair of A to D converters (ADC) (44, 46) for converting the analog signal to a digital signal, and a pair of proportional-integral-derivative (PID) controllers (48,49) for controlling the output voltage to each coil driver circuit via a pair of pulse width modulators (PWM) (50, 51) and a pair of voltage regulators (52, 54). The voltage regulators (52, 54) regulate the voltage from each respective voltage source (39, 41) to a desired output voltage, which is provided to each coil driver circuit.

The two coil drivers (32, 34) are energy management integrated circuits (IC) which provide an active power pulse output. The coil drivers can be a fully integrated IC or a bridge built using discrete components (i.e. power MOSFETS). In an exemplary embodiment, the coil drivers can be embodied as H bridge drivers with very low resistance and low voltage drop. As such, the coil drivers are capable of alternating the direction of the current passing through each coil assembly, and switching the direction of the magnetic field emitted from each coil. The direction of the drive current is alternated, along with the magnetic field, so as to avoid the electrochemical phenomenon of electrode migration.

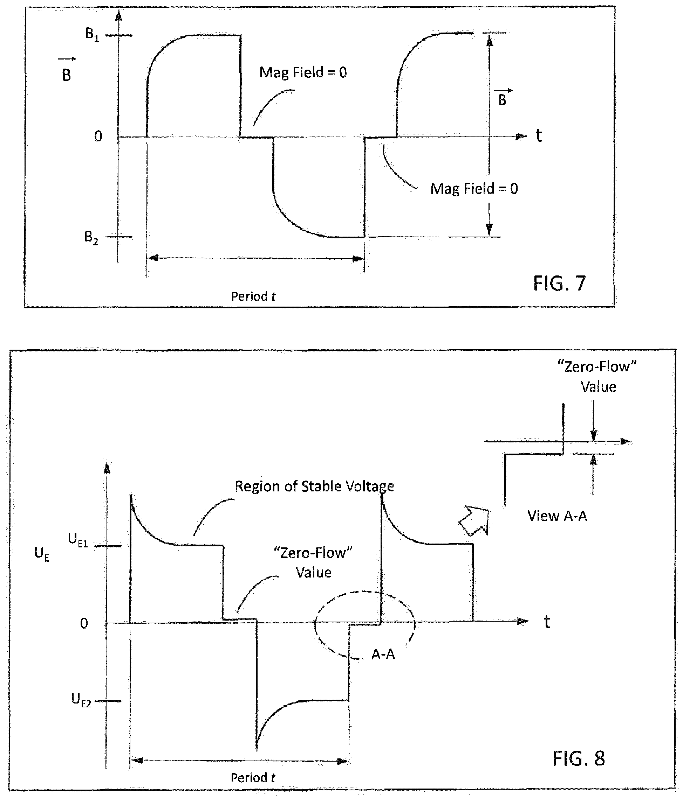

As illustrated in FIG. 6, a time period $\tau$ denotes a complete cycle for the alternating current which flows through the coil assemblies (8, 20) (i.e. flows in a clockwise direction through the coil assemblies followed by flow in a counter-clockwise direction). Moreover, FIGS. 7-8 depict an illustrative magnetic field B generated by the coil assemblies and an induced voltage $U_E$ sensed by the electrodes for a complete operation cycle over time period $\tau$, respectively.

Referring again to FIG. 3, the shunt resistors (36, 38) create a voltage drop that is proportional to the current flowing through them. The shunt resistors have a fairly low resistance to limit power dissipation losses and minimize the impact on the magnetic field B. For example, a 0.1 Ohm resistance in a 10A circuit will drop 1 volt.

In addition, and/or alternatively, the resistance of the shunt resistors (36, 38) can be manipulated to stabilize the drive current and magnetic field faster. Considering that the drive current is time-varying, obtaining a stable drive current more quickly will stabilize the magnetic field as well (as depicted in FIGS. 2 and 7), and thereby improve the conditions for obtaining accurate flow measurement in a given time period. This is depicted by the corresponding regions of stable voltage illustrated in FIG. 8.

As illustrated in the equation below, current (I) can be defined as a function of voltage (V), resistance (R), inductance (L) and time (t):

$$I = V/R * [1 - e^{\wedge}(-)R/L * t]$$

The resistance across the coil driver system can be based on the resistance across the shunt resistors (36, 38), and the resistance within each coil assembly (18, 20) (i.e. coil resistance). The inductance is based on the coil assembly's configuration (i.e. coil inductance). Specifically, the coil resistance and coil inductance are unique for each of the coil assemblies (18, 20), and are determined by the number of coil turns and the coil geometry within the respective coil assembly (18, 20). Referring again to the equation for current (I), it is apparent that a larger resistance R will provide a stable current faster. Thus, the resistance of the shunt resistors can be optimized to provide a stable current faster without significantly impacting the magnetic field due to power dissipation losses due to the higher voltage drop.

Referring again to FIG. 3, the two instrumentation amps (40, 42) receive the voltage across the shunt resistors (36, 38), which are then scaled in a manner enabling the received voltage to be processed. The instrumentation amps (40, 42) amplify the signal and maintain a linear relationship between the input current ($I_1$, $I_2$) and the output voltage ($V_{out1}$, $V_{out2}$). The analog-to-digital converters (44, 46) receive the analog output from the instrumentation amps (40, 42) and convert it into a digital signal. The analog information is transmitted by modulating a continuous transmission signal and amplifying the signals strength or varying its frequency to add the data to the transmission signal.

In an exemplary embodiment, the digital data from the two A/D converters (44, 46) represent the drive current ($I_1$, $I_2$) measured by the shunt resistors (36, 38). An error amplifier (56, 58) identifies the difference between a reference current ($I_{ref}$) (60,62) and the measured current ($I_1$, $I_2$), and outputs an error signal. The reference current ($I_{ref}$) is optimized based upon a desire for 1) a strong magnetic field (B) and 2) low power consumption. Higher power is inefficient due to excessive heat generation and other effects. On the other hand, higher power output may be necessary since that the magnetic field strength, as applied to a fluid, decreases as the pipe size increases.

With continued reference to FIG.3, the PID controllers (48, 49) are configured to receive the respective error signal, and apply proportional, integral, and derivative (PID) factors such that the difference between the targeted current ($I_{ref}$) (60,62) and measured current ($I_1$, $I_2$) are kept at a minimum. Specifically eliminating any differences between $I_{ref}$, $I_1$ and $I_2$. The PID controllers use a combination of: 1) specifying an output proportional to the error detected (i.e., proportional controller), 2) minimizing the steady-state error by limiting the response rate of the system, so as to not over-shoot the system-corrected response (i.e., integral controller), and 3) predicting the system response based on an output (i.e., derivative controller). As such, the PID controller is configured to implement a "System Tuning Process" enabling a better targeted output for minimizing error signals. The PID controller (48, 49) will subsequently output commands to the pulse width modulator (PWM) (50, 51).

In an alternate embodiment, a micro-processor receives the digital data from the two A/D converters (44, 46), process the data using instructions stored in the respective memory, and provides the results as an output. Such data processing can include comparing the measured electrical property ($I_1$, $I_2$) against a target electrical property, wherein the processor then computes the PID output, and subsequently outputs a series of commands for the pulse width modulators (50, 51). The micro-processor can be any embedded microcontroller capable of performing the aforementioned tasks. An example of a micro-processer is a Raspberry Pi single board computer developed by the Raspberry Pi Foundation. However, it should be appreciated that current measurements ($I_1$, $I_2$) could be processed by a general-purpose processor (e.g., x86 device), a microcontroller, a gate array, an application specific integrated circuit (ASIC), or other type of computer processor.

Pulse width modulation (PWM) is used to control the current supplied to the two coil drivers (32, 34) via the output from the PID controller (or micro-processor, microcontroller, etc.). The pulse width modulators (50, 51) control the average voltage output, (and thereby regulate the current passing through each respective coil assembly (18, 20), by switching between supply and load rapidly based upon commands received from the PID controllers (48, 49). Each PWM (50, 51) can be configured with a duty cycle ranging from 0 to 100% and frequencies that can range up to kHz, in order to bring the ERROR to zero. Moreover, the use of PWM ensures that the power loss in the switching device is low and that there is minimal current being delivered to the coil assemblies when the switch is "off".

The PWM signal is subsequently filtered (64, 66) and converted into a DC voltage that is buffered (68, 70), which is then used to control the voltage regulators (52, 54) to output a voltage to the respective coil driver circuit in a manner that enables the current through the coil assemblies to remain constant (or as close as possible) to the targeted current ($I_{ref}$). As such, a prescribed magnetic field (B) will be generated, overcoming the presence of factors that may influence said magnetic field, and thus enable for a more accurate flow measurement.

The voltage sources (39, 41) coupled to the respective voltage regulators (52, 54) are a dependent or controlled voltage source which maintains a fixed voltage generally independent of the output current. In an alternate embodiment, the voltage sources (39, 41) are controlled in real time based on the control signal received from the respective pulse width modulator (50, 51).

An advantage in using individual coil drivers for each coil assembly is that the required voltage output can be reduced by as much as half as compared to using a single coil driver to pass current through the coil assemblies in series. The Voltage Headroom needed when using individual coil drivers is calculated based on:

$$V_1 = (R_{Coil1} + R_{Sensor}) * I_1$$

Where:

R$_{coil1}$ = coil resistance for a first coil assembly
R$_{Sensor}$ = sensor resistance
I = current passing through a first coil assembly.

By contrast, a common coil driver with coil assemblies in arranged in series would require a Voltage Headroom based on :

$$V = (R_{Coil1} + R_{Coil2} + R_{Sensor}) * I$$

As such, a voltage source with a lower output voltage for each coil driver can be used. For example, the voltage required can potentially be lower than that required for a car battery, such as 10.8V.

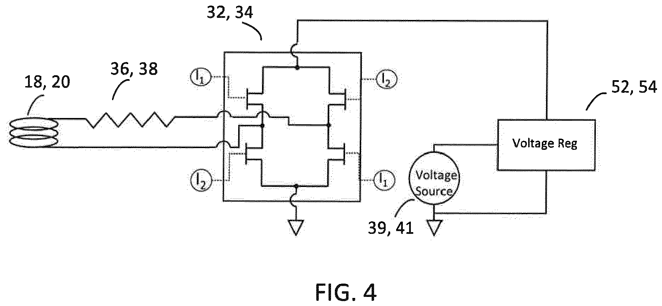

Referring to FIG. 4, a detailed depiction of an H bridge driver (32, 34) is shown. The drive current, based on the output voltage from the voltage regulators (52, 54), flows through the respective coil assembly (18, 20) through one of two paths. Based on a first path, denoted as I$_1$, the H bridge driver will be configured to direct the current to flow clock-wise through the coil assemblies by preventing the current from flowing through a second path denoted as I$_2$ within the driver. Conversely, based on the second path (I$_2$), the H bridge driver will direct the current to flow counter-clockwise through the coil assemblies by preventing the current from flowing through the first path. As such, following the right-hand rule (as depicted in FIG. 5), the direction of the magnetic field 22 will alternate based on the drive current's direction, and thus, the direction of the induced voltage as measured by the electrodes 26 will also alternate.

Referring now to FIGS. 5-8, we'll explain how the coil drive system zeros U$_E$ and establishes a uniform magnetic field B within the fluid flow field. With reference to FIG. 5, the voltage potential U$_E$ across the conductive fluid is the difference in voltages between the measuring electrodes U$_{E1}$ and U$_{E2}$. As noted earlier, a constant magnetic field B across the fluid flow v is achieved when U$_E$ is zero.

$$U_E = U_{E1} - U_{E2}$$

With reference to FIG. 6, an illustrative drive current (I) is shown with magnitudes (I$_1$, I$_2$) and period $\tau$. As noted earlier, each coil driver is individually controllable and drives a single coil assembly. In this example, drive current I$_1$ is provided by a first coil driver in a first direction, and drive current I$_2$ is provide by said first coil driver in a second direction. The drive currents can have a frequency range of near zero (0 Hz) to the kilohertz range and a magnitude generally less than ten (10) amps. In this example, the magnitude of the individual drive currents (I$_1$, I$_2$) are equal. However, we will later describe how the individual drive currents (I$_1$, I$_2$) for each coil driver are modulated to produce a constant time-varying magnetic field B.

With reference to FIG. 7, an illustrative time varying magnetic field B is shown with magnitudes (B$_1$, B$_2$) and period $\tau$. As noted earlier, variations in the magnetic field $\vec{B}$ can introduce errors into the fluid velocity measurements. So, it is important that changes in the magnetic field are corrected in real-time to ensure that the fluid flow measurements are accurate and consistent over time. In this example, we see that $\vec{B_1}$ and $\vec{B_2}$ have the same absolute magnitude and the period is consistent over time.

With reference now to FIG. 8, an illustrative sensed voltage U$_E$ is shown with magnitudes (U$_{E1}$, U$_{E2}$) and the same period as the $\tau$ magnetic field B. As discussed earlier, U$_E$ is the difference between the voltages of the individual measuring electrodes U$_{E1}$ and U$_{E2}$. Accordingly, Fig 8 shows the waveform of the Ue as the difference of Ue1 and Ue2. In an ideal situation, if coils are perfectly identical and the two coil currents absolutely equal, the Zero Flow would be calculated as (Ue1+Ue2)/2. As Ue1 = (ideal) - Ue2, the zero flow would be zero. In reality, Ue1 and Ue2 will be slightly different and therefore the calculated zero will represent an offset.

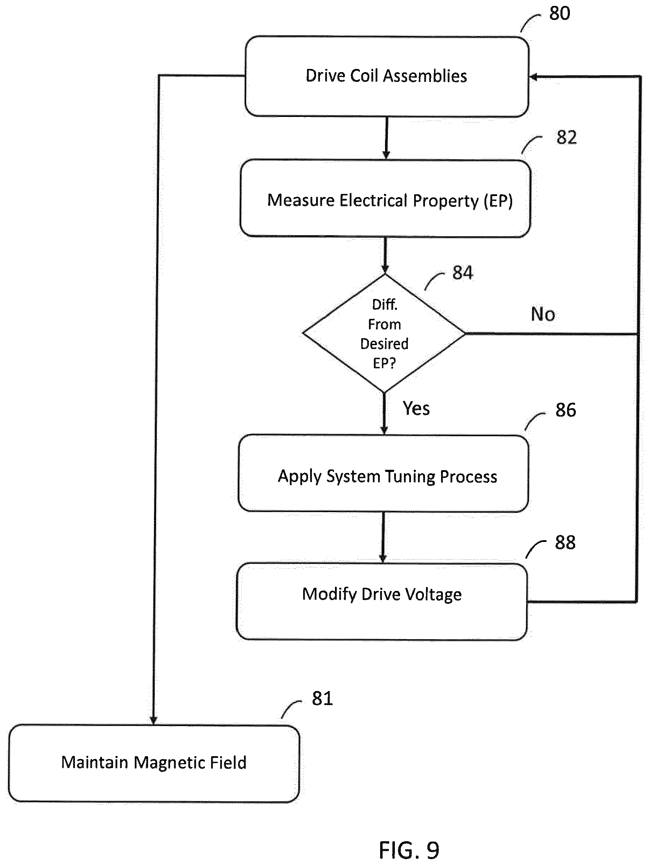

With reference now to FIG. 9, a method for controlling a full-bore magnetic flowmeter is described. The method begins by providing a drive current to the two coil assemblies using the first and second coil drivers (Step 80). As illustrated in FIG.6 the drive currents I have magnitudes I$_1$ and I$_2$, and period $\tau$. The drive current flow through the coil assemblies and generate a magnetic field across the fluid flow path (Step 81).

Two sensors measure an electrical property in one or both coil assemblies (Step 82) which is then scaled by an instrumentation amplifier, and converted from an analog to digital signal using the A/D converter. Using an error amplifier, the digital signal is compared against a target value (desired). If the digital signal is identical to the target value, (e.g., I$_{ref}$ = I$_1$ and/or I$_2$), then the drive current passing through the coil assemblies are generating the desired magnetic field, and the voltage regulators continue operating with the same output voltage ("No" branch). Alternatively, if an error signal is detected between the target value and digital signal (e.g., I$_{ref}$ = I$_1$ and/or I$_2$), the output voltage is modified ("Yes" branch) (Step 84).

Using a PID controller, a system tuning process is applied (Step 86) to minimize the detected error signal, the tuning process provides an output that efficiently addresses any measured error. The voltage regulators are provided with an output from a PWM that modifies the respective drive voltage (Step 88). As such, the drive currents and corresponding drive voltages are modified in order to generate the desired magnetic field (Step 81) and minimize the error between the actual and target drive currents.

With reference now to FIG. 10, the coil assemblies 18, 20 are coupled to a tubular body (pipe) 12 in an intermediate region thereof. The coil assemblies are mounted external to the pipe, aligned along the axis (Az). More particularly, each coil is held in place by a brace 21 that circumscribes the pipe 12. A magnetic pole 25 is disposed between the coil 18 and the pipe. The magnetic pole is formed of conductive material, e.g., metal same as the magnetic brace, soft magnetic Carbon Steel with Fe% > 99.4, and shaped to conform about the pipe. Nonconductive (airgap) shims 27 are disposed on opposing ends of the coils. With each coil, a first airgap shim 27 is sandwiched between the coil and the corresponding magnetic pole 25, and a second airgap shim 27 is sandwiched between the coil and the brace 21. In each coil, there is a core made of a material with good magnetic properties. These cores are transferring the flux lines from the coils into the pole shoes and the magnetic brace.

The brace 21 further serves as magnetic circuitry for the magnetic field generated by the coils (18, 20), which conducts the magnetic field going outwards the pipe to be added to the magnetic field going inwards. The brace has a generally octagonal shape, which benefits assembly and operation of the assembly 10. More particularly, the brace 21 is formed of two, generally c-shaped components 29 that slidably mate with each other about the pipe, to couple to each other. In this manner, the brace 21 can be used on pipes having different diameters. Attachments (e.g., bolts) couple the coils to the brace along the axis (Az).

The assembly 10 is configured to generate a strong alternating magnetic field (flux) B that is distributed evenly over the pipe cross-section. Utilizing an alternating magnetic field avoids electrode material migration. Configuration of the brace 21, e.g., including shape and materials, facilitates the resulting magnetic field (flux) B within the pipe 12. In the exemplary embodiment the brace 21 is formed of "soft" magnetic materials, such as soft ferrous material, which refers to relative permeability, meaning it has no remnant magnetization, when shut down. As such, magnetic losses are minimized for the magnetic field going outwards from the pipe and added to the magnetic field going inwards to the pipe.

With reference now to FIG. 11, the assembly 10 further includes a housing 35 configured to protect the magnetic field generator (which includes the coils 18, 20 and the brace 21), from environmental exposure. The assembly 10 further includes an electronics assembly 62 attached to the housing of the assembly. The electronics assembly is in electrical communication with the electrodes (19, 26) and the coil assemblies (18, 20) to operate the assembly 10. In an exemplary embodiment, electronics assembly can house components such as drivers (32, 34), op amps (40, 42), A to D converters (ADC) (44, 46), PID controllers (48, 49) (or a micro-processor), and pulse width modulators (PWM) (50, 51), among others.

As noted earlier, magnetic flowmeter relies upon Faraday's law of induction to determine the velocity of conductive fluids. The induced voltage Ue is proportional to the average velocity of the conductive fluid v, the magnetic field strength B and the distance between the sensing electrodes L.

$$Ue \sim v \times B \times L$$

The "zero-flow" value is the induced voltage Ue when the fluid velocity is zero. In other words, when the fluid media is stationary within the flowmeter's magnetic field Faraday's law tells us that the induced voltage Ue should be zero when the fluids velocity is zero. However, this is typically not the case and there are many reasons for a Ue not to be zero at a "zero-flow" condition. These include measurement errors, calibration errors, and the fluid media having an electrical potential, among others. By correcting for these measurement errors from a fluid velocity measurement, the measurements will not only be more accurate, but it will be possible to measure lower velocity fluid flows.

The "zero-flow" value can be approximated by $(U_{E1} + U_{E2}) / 2$ where $U_{E1}$ and $U_{E2}$ are the induced voltages sensed by the pair of electrical electrodes. This approximation assumes that $U_{E1} = U_{E2}$ which implies that the coil assemblies are perfectly matched and media conditions are uniform across the flow path. Referring to FIGS. 7 and 8 we see that the magnetic field B is zero (0) at regular time intervals and that these events correspond directly to the "zero-flow" values illustrated by the induced voltage $U_E$ chart.

Accordingly, a magnetic flowmeter's "zero-flow" value can be monitored and recorded continuously by programming the flowmeter to measure $U_E$ when B = 0. These "real zero" flow values can then be used to correct for fluid velocity measurement errors, track calibration errors over time, identify process control issues, and/or track the fluid media's electrical potential, among others.

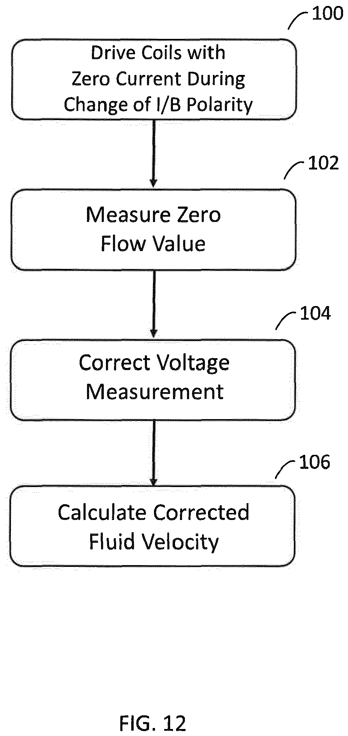

With reference to FIG. 12, the novel method for operating a magnetic flowmeter is described. The method begins by driving the pair of coil assemblies to zero (0) current as the current though the bridge is blocked (Step 100). As illustrated in FIG. 6 this occurs at regular time intervals when the magnitude of the drive current I passes through zero as it changes magnitude and direction. The 'zero-flow" measurement value is measured when the coil assemblies are at zero (0) current (Step 102). As FIG. 8 illustrates, the "zero-flow" value is measured at regular time intervals when the magnitude of the magnetic field B is zero. The induced voltage measurement is then corrected by subtracting the "zero-flow" value from the inducted voltage detected by the electrical electrodes (Step 104).

$$U_{E\,correct} = U_E - \text{Zero-flow Value}$$

Referring again to FIG. 8 we see that the induced voltage $U_E$ has a finite, non-zero value when the coil assemblies are being actively driven by the coil drivers. The corrected voltage measurement is used to calculate a corrected fluid velocity using Faraday's law of induction (Step 106).

$$V_{correct} \sim \frac{U_{E\,correct}}{B \times L}$$

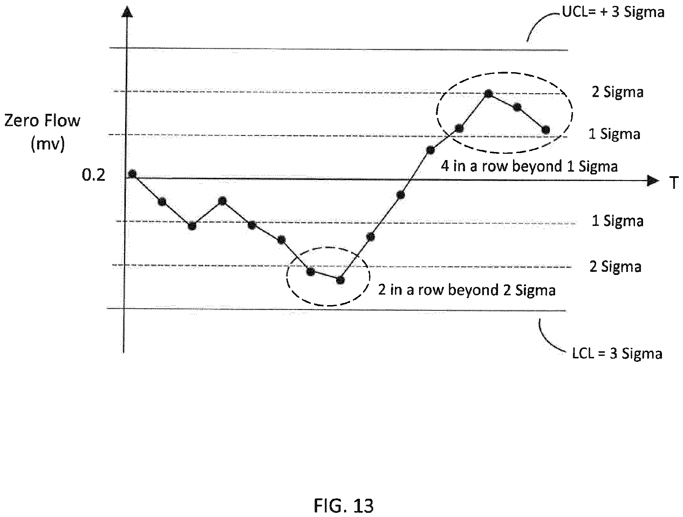

Finally, it should also be noted that the "zero-flow" measurements can be recorded in computer memory and analyzed to detect trends, process variations, material variations and potential problems as they occur. FIG. 13 depicts a control chart for analyzing the "zero-flow" data. The "zero-flow" data is plotted over time and compared to various statistical control limits. In this example, the central line (0.2 mv) is the "zero flow" data's historical average and the control limits (i.e., 1 Sigma, 2, Sigma, and 3 Sigma) are based on the standard deviation of the data. By comparing the real time data to the various control limits out of control conditions can be identified (i.e., process control issues, calibration issues, variations in the fluid's electrical potential, etc.).

The statistical indications of an out of out of control condition may include: a single data point outside the upper control limit (UCL) or lower control limit (LCL), two out of three successive data points beyond the 2 Sigma limitation i.e., (first example), or four out of five successive points beyond the 1 Sigma limitation (i.e., second example). The two illustrative out of control conditions are then investigated to determine if they're indicators of real problems that should be addressed. For example, the large swing in the zero-flow value maybe indicative of a faulty grounding ring, variations in the fluid's electrical potential or differences in the magnetic ring's performance.

The present invention has been described above in terms of presently preferred embodiments so that an understanding of the present invention can be conveyed. However, there are other embodiments not specifically described herein for which the present invention is applicable. Therefore, the present invention should not to be seen as limited to the forms shown, which is to be considered illustrative rather than restrictive.

Although the invention has been disclosed in detail with reference only to the exemplary embodiments, those skilled in the art will appreciate that various other embodiments can be provided without departing from the scope of the invention, to include any and all combination of features discussed herein.

**Claims**

1. A method for operating a magnetic flowmeter, the flowmeter configured to measure a velocity of a conductive fluid in a flow path, the method comprising:

driving a first coil assembly and a second coil assembly to a zero (0) current to prevent a magnetic field from forming in the fluid flow path;
measuring a zero-flow measurement value in the fluid flow path, the zero-flow measurement value occurring when the first and second coil assemblies are at the zero (0) current;
correcting a voltage measurement by subtracting the zero-flow measurement value from an induced voltage detected by a pair of electrical electrodes when the first coil assembly and the second coil assembly are driven by a non-zero current; and
determining a corrected fluid velocity measurement from the corrected voltage measurement, the corrected fluid velocity being corrected for the zero-flow measurement value.

2. The method as defined in claim 1, wherein driving the first coil assembly and second coil assembly to a zero (0) current comprises not driving the first coil assembly with a first drive current and not driving the second coil assembly with a second drive current.

3. The method as defined in claim 1, wherein measuring a zero-flow measurement value in the fluid flow path comprises measuring a residual voltage with a pair of electrical electrodes located perpendicular to the fluid flow path.

4. The method as defined in claim 1, wherein correcting a voltage measurement comprises driving the first coil assembly and second coil assemblies with non-zero currents such that the magnitude of the voltage inducted by the first coil assembly equals the magnitude of the voltage induced by the second coil assembly.

5. The method as defined in claim 1, further comprising monitoring the zero-flow measurement value to detect changes of the conductive fluid's electrical potential.

6. The method as defined in claim 1, further comprising monitoring the zero-flow measurement value to detect performance changes of the magnetic coil assemblies.

7. The method as defined in claim 1, further comprising monitoring the zero-flow measurement value to detect grounding changes of the conductive fluid.

8. A device for controlling a magnetic flowmeter, the magnetic flowmeter configured to measure the velocity of a conductive fluid in a flow path, the device comprising:

a first coil assembly circuit configured to generate a first magnetic field proximate the fluid flow path, the first coil assembly circuit comprising:
a first coil assembly;

a first voltage source configured to provide a first voltage output; and
a first coil driver configured to provide a first drive current to the first coil assembly based on the first voltage output;

a second coil assembly circuit configured to generate a second magnetic field proximate the flow path, the second coil assembly circuit comprising:
a second coil assembly;

a second voltage source providing a second voltage output; and
a second coil driver configured to provide a second drive current to a second coil assembly based on the second voltage output;

a pair of electrical electrodes configured to detect a voltage signal proximate the fluid flow path; and
a computer processor configured to:

determine a zero-flow measurement value in the fluid flow path by driving the first and second voltage sources to a zero (0) electrical potential and measuring a residual voltage in the fluid flow path using the pair of electrical electrodes;
correct a voltage value by subtracting the zero-flow measurement value from an induced voltage, the induced voltage being detected by the pair of electrical electrodes when the first and second voltage sources are driven to non-zero electrical potentials; and
calculate a corrected fluid velocity value from the corrected voltage value, the corrected fluid velocity value adjusted for the zero-flow measurement value.

9. The device as defined in claim 8, wherein the computer processor drives the first and voltage sources to non-zero potentials such that the magnitude of the voltage inducted in the first coil assembly equals the magnitude of the voltage induced in the second coil assembly.

10. The device as defined in claim 8, wherein the computer processor is further configured to monitor the zero-flow measurement value to detect performance changes of the magnetic coil assemblies.

11. The device as defined in claim 8, wherein the computer processor is further configured to monitor the zero-flow measurement value to detect grounding changes of the fluid media.

12. The device as defined in claim 8, wherein the computer processor is further configured to monitor the zero-flow measurement value to detect changes in the conductive fluid's electrical potential.

13. A non-transient computer readable storage medium comprising computer executable instructions that when executed by a computer processor performs a method, comprising:

driving a first coil assembly and a second coil assembly to a zero (0) current thereby preventing a magnetic field from forming in the fluid flow path;
detecting a zero-flow measurement value in the fluid flow path using a pair of electrical electrodes, the measurement value being detected when the first and second coil assemblies are at zero (0) current;
determining a corrected voltage measurement by subtracting the zero-flow measurement value from an induced voltage value detected by the pair of electrical electrodes when the first coil assembly is driven by a first drive current and the second coil assembly is driven by a second drive current; and
calculating a corrected fluid velocity value from the corrected voltage measurement, the corrected fluid velocity value compensating for the zero-flow measurement value.

14. The non-transient computer readable storage medium as defined in claim 13, wherein driving the first coil assembly and the second coil assembly to a zero (0) current comprises not driving the first coil assembly with a first drive current and not driving the second coil assembly with a second drive current.

15. The non-transient computer readable storage medium as defined in claim 13, wherein determining a corrected voltage measurement comprises driving the first coil assembly and second coil assembly with non-zero currents such that the magnitude of the voltage inducted in the first coil assembly equals the magnitude of the voltage induced in the second coil assembly.

FIG. 1

FIG. 2

FIG. 3

FIG. 4

FIG. 5

FIG. 6

FIG. 7

FIG. 8

80

```
┌──────────────────────────────┐
│     Drive Coil Assemblies      │
└──────────────────────────────┘
```

82

```
┌──────────────────────────────┐
│  Measure Electrical Property (EP)  │
└──────────────────────────────┘
```

84

Diff.
From
Desired
EP?

No

Yes

86

```
┌──────────────────────────────┐
│   Apply System Tuning Process    │
└──────────────────────────────┘
```

88

```
┌──────────────────────────────┐
│       Modify Drive Voltage       │
└──────────────────────────────┘
```

81

```
┌──────────────────────────────┐
│     Maintain Magnetic Field      │
└──────────────────────────────┘
```

FIG. 9

FIG. 10

FIG. 11

100

Drive Coils with
Zero Current During
Change of I/B Polarity

102

Measure Zero
Flow Value

104

Correct Voltage
Measurement

106

Calculate Corrected
Fluid Velocity

FIG. 12

FIG. 13

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 102 435 239 B (UNIV SHANGHAI) 19 December 2012 (2012-12-19) * abstract * * paragraphs [0009], [0012], [0029] - [0032]; figures 1, 2 * | 1-7, 13-15 | INV. G01F1/60 G01F25/00 G01F1/58 |
| X | RU 2 645 834 C1 (OBSHCHESTVO S OGRANICHENNOJ OTVETSTVENNOSTYU TBN ENERGOSERVIS [RU]) 28 February 2018 (2018-02-28) | 1-4,8,9, 13-15 | |
| Y | * paragraphs [0051] - [0118]; figures 2a, 2b, 3a, 3b * | 10-12 | |
| X | JP 2000 081346 A (AICHI TOKEI DENKI KK) 21 March 2000 (2000-03-21) * paragraphs [0040], [0057], [0073]; figure 1 * | 1-4, 13-15 | |
| Y | US 2016/258793 A1 (LI WANDONG [JP] ET AL) 8 September 2016 (2016-09-08) * paragraphs [0015] - [0034]; figures 1-3 * | 10-12 | |

**TECHNICAL FIELDS SEARCHED (IPC)**

G01F

The present search report has been drawn up for all claims

| Place of search | Date of completion of the search | Examiner |
|---|---|---|
| The Hague | 30 April 2020 | Myrillas, K |

EPO FORM 1503 03.82 (P04C01)

**ANNEX TO THE EUROPEAN SEARCH REPORT
ON EUROPEAN PATENT APPLICATION NO.**

EP 20 15 0488

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2020

| Patent document cited in search report | | Publication date | Patent family member(s) | | Publication date |
|---|---|---|---|---|---|
| CN 102435239 | B | 19-12-2012 | NONE | | |
| RU 2645834 | C1 | 28-02-2018 | NONE | | |
| JP 2000081346 | A | 21-03-2000 | JP 4180702 B2 | | 12-11-2008 |
| | | | JP 2000081346 A | | 21-03-2000 |
| US 2016258793 | A1 | 08-09-2016 | EP 3064905 A2 | | 07-09-2016 |
| | | | US 2016258793 A1 | | 08-09-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 16146090 B
- US 16243868 B